(19) Europäisches Patentamt
European Patent Office
Office européen des brevets

(11) Publication number : 0 627 466 A2

(12) **EUROPEAN PATENT APPLICATION**

(21) Application number : **94303586.5**

(22) Date of filing : **19.05.94**

(51) Int. Cl.[5] : **C08L 71/12**, C08L 77/00

(30) Priority : **01.06.93 US 69484**

(43) Date of publication of application : **07.12.94 Bulletin 94/49**

(84) Designated Contracting States : **DE ES FR GB IT NL**

(71) Applicant : **GENERAL ELECTRIC COMPANY**
**1 River Road**
**Schenectady, NY 12345 (US)**

(72) Inventor : **Campbell, John Robert**
**41 Pepper Hollow**
**Clifton Park, New York 12065 (US)**
Inventor : **Wroczynski, Ronald James**
**209 Vincenza Lane**
**Schenectady, New York 12303 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Heat resistant immiscible polyamide blends containing polyphenylene oxide based compositions.**

(57) High glass transition temperature polyphenylene ether based compositions may be incorporated into immiscible polymer blends in order to obtain improved heat deflection temperatures. More particularly, high glass transition temperature polyphenylene ether base composition may be incorporated into polyamides in order to increase heat deflection temperatures while retaining solvent resistant properties, high impact strength and copolymer compatibility.

EP 0 627 466 A2

## Field of the Invention

This invention relates to new compositions of matter and more particularly to immiscible polyamide blend compositions containing high glass transition temperature polyphenylene oxide based compositions incorporated therein. The resulting immiscible polyamide blends unexpectedly exhibit improved heat deflection temperatures (HDT) while retaining solvent resistant properties, high impact strength and copolymer compatibility.

## Background of the Invention

Polyethers and/or polymer blends which contain polyphenylene ethers (PPE) constitute an invaluable class of engineering thermoplastic resins. Resins of polyphenylene ethers are characterized by a unique combination of chemical, physical and electrical properties. For instance, they are resistant to many solvents and generally display high impact strengths. As a result of this unique combination of properties, resins of polyphenylene ethers are suitable for a broad range of commercial applications.

It has been of increasing interest to prepare polymer blends which, while retaining their characteristic hydrolytic stability, dimensional stability and dielectric properties, have higher heat deflection temperatures. Particularly, there is a demand for immiscible blends, like polyamide blends, which possess increased heat deflection properties since they are, for instance, conventionally used in parts exposed to high temperatures in the automotive industry.

Polymers are often blended in an effort to produce a combination displaying synergistic property improvements beyond those that are essentially additive in effect. The blends are commonly classified as being miscible or immiscible. Miscible blends may be defined as a polymer combination wherein the original identity of the component polymers is lost in the final blend. Conversely, immiscible blends consist of a matrix of polymers resulting in a structure composed of two different intertwined plastics in which each retains its own original physical characteristics.

Several efforts have been made to increase the HDT values of miscible polymer blends. It has been discovered that utilizing PPE-based compositions of high glass transition temperatures (Tg), in lieu of alternative PPE compositions, results in miscible blends possessing increased HDT values. For example, miscible blends comprising xylenol and 2,3,6-trimethylphenol (TMP) copolymers and polystyrene have been shown to exhibit increased HDT values when compared to respective blends which incorporate a low Tg xylenol homopolymer.

Nonetheless, no efforts have been disclosed which demonstrate an improvement in HDT values of immiscible blends; particularly polyamide blends. The instant invention, therefore, is based on the discovery that heat deflection temperatures of immiscible polyamide blends may be increased by incorporating a higher Tg PPE-based composition into the polymer blend.

## Description of the Prior Art

As previously stated, attempts have been made to prepare polymer blends of polyphenylene ethers containing high HDT values. Commonly assigned U.S. Patent 4,866,130 discloses solvent-resistant compatible resins prepared from a blend of polyphenylene ethers which may include polystyrene, poly(alkylene dicarboxylates) and polycarbonate compatibilizers. The resulting polymer blends display a high degree of resistance to solvents as well as elevated temperature conditions.

Other investigators have focused their attention on polyamide blends in order to improve impact strengths, solvent resistances and copolymer compatibility. In commonly assigned U.S. Patent 4,888,397, it is disclosed that a preparation of compositions comprising polyphenylene ethers, polyamides and olefinic or acetylenic compounds results in polyphenylene ether-polyamide blends containing favorable impact strengths and solvent resistances.

Still others, such as those described in commonly assigned U.S. Patents 4,994,525, 5,041,504 and 5,115,042, reveal blends of polymers containing polyamide groups and epoxy or ortho ester groups, whereby the objective is to compatibilize blends in order to prevent phase separation and delamination.

Finally, U.S. Patent 4,873,286 introduces a modified polyphenylene ether-polyamide comprising a polycarboxylic acid modifier in order to improve processability, chemical resistance and elongation properties.

The novel heat resistant polyamide blends of the instant invention are distinguishable from the above polyphenylene ether blends since, among other reasons, they incorporate PPE-based compositions having high Tg temperatures into an immiscible polyamide blend in order to achieve increased HDT values.

**Summary of the Invention**

The principal object of the present invention therefore is to increase HDT values of immiscible polyamide blends by incorporating therein PPE-based compositions that have high glass transition temperatures.

The objective is achieved by incorporating into the immiscible polyamide blend composition a high Tg PPE-based composition comprising a plurality of structural units of the formulae

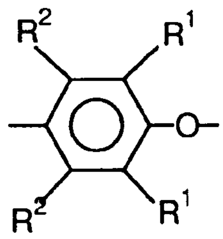

I

and

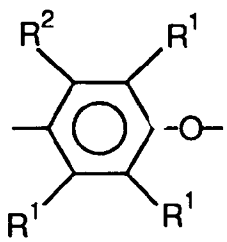

II .

In each of said units independently each $R^1$ is independently halogen, primary, secondary or tertiary lower alkyls (i.e., alkyl, containing up to 7 carbon atoms), phenyl, haloalkyl, aminoalkyl, hydrocarbonoxy, or halohydrocarbonoxy wherein at least 2 carbon atoms separate the halogen and oxygen atoms; each $R^2$ is independently hydrogen, halogen, primary, secondary or tertiary alkyl, phenyl, haloalkyl, hydrocarbonoxy or halohydrocarbonoxy as defined for $R^1$. Most often, $R^1$ is methyl and $R^2$ is hydrogen.

Copolymer compositions are preferred and they include block or random copolymers containing I in combination with II. Moreover, a random copolymer composition of 2,6-xylenol and TMP is most preferred whereby the distribution of I to II in the copolymer composition is about 80 to 20% by weight of the former and about 20 to 80% by weight of the latter. Also included are polyphenylene ethers containing moieties prepared by grafting onto the polyphenylene ether in known manner such materials as vinyl monomers or polymers such as polystyrenes and elastomers, as well as coupled polyphenylene ethers in which coupling agents such as low molecular weight polycarbonates, quinones, heterocycles and formals undergo reaction in known manner with the hydroxy groups of two polyphenylene ether chains to produce a higher molecular weight polymer, provided a substantial proportion of free OH groups remains.

The instant polyphenylene ethers generally have a number average molecular weight within the range of about 3,000-40,000 and a weight average molecular weight within the range of about 20,000-80,000, as determined by gel permeation chromatography. Their intrinsic viscosity is often in the range of about 0.15-0.6 dl./g., as measured in chloroform at 25°C.

**Brief Description of the Drawings**

Figures 1 and 2 depict an assessment of the effect of varying PPE-based compositions in immiscible blends and Figure 3 describes the retention of blend modulus at elevated temperatures when a high Tg PPE-based composition is incorporated into an immiscible polyamide blend.

**Detailed Description of the Preferred Embodiments**

The polyphenylene based ethers of the instant invention are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Furthermore, polyphenylene based ethers suitable for use in the practice of the present invention may be prepared by any of a number of processes utilizing precursor corresponding phenols or derivatives thereof. Examples for their production are disclosed in U.S. Patents 3,306,874; 3,306,875; 3,257,357; 3,257,358; 3,337,501; and 3,787,361, all incorporated herein by reference.

Additional useful polyphenylene ethers are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as din-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A proportion of the polymer molecules may contain at least one of said aminoalkyl-containing and 4-hydroxybiphenyl end groups.

The immiscible polymer blend of the instant invention also comprises polyamides in conjunction with the above-mentioned PPE-based ethers. The polyamides are obtained, for instance, by polymerizing a monoaminemonocarboxylic acid; or a lactam thereof having at least 2 carbon atoms between the amino and carboxylic acid group or by polymerizing substantially equimolar proportions of a diamine which contains at least 2 carbon atom amino groups and a dicarboxylic acid; or by polymerizing a monoaminocarboxylic acid or a lactam thereof as defined hereinabove together with substantially equimolar proportions of a diamine and a dicarboxylic acid. The dicarboxylic acid in the form of a functional derivative thereof; for example, an ester or acid chloride.

The term "substantially equimolecular" proportions (of the diamine and of the dicarboxylic acid) is used to cover both strict equimolecular proportions and slight departures therefrom which are involved in conventional techniques for stabilizing the viscosity of the resultant polyamides.

Examples of the aforementioned monoaminomonocarboxylic acids or lactams thereof which are useful in preparing the polyamides include those compounds containing from 2 to 16 carbon atoms between e amino and carboxylic acid groups, said carbon atoms forming a ring with the -CO-NH-group in the case of a lactam. As particular examples of aminocarboxylic acids and lactams there may be mentioned aminocaproic acid, butyrolactam, pivalolactam, caprolactam, capryl-lactam, enantholactam, undecanolactam, dodecanolactam and 3- and 4-aminobenzoic acids.

Diamines suitable for use in the preparation of the polyamides include straight chain and branched, alkyl, aryl and alkyl-aryl diamines. Such diamines include, for example, those represented by the general formula

$$H_2N(CH_2)_nNH_2 , \qquad II$$

wherein n is an integer of from 2 to 16, such as trimethylenediamine, tetramethylenediamine, pentamethylenediamine, octamethylenediamine and especially hexamethylenediamine, as well as trimethyl hexamethylene diamine, meta-phenylene diamine, metaxlylene diamine and the like.

The dicarboxylic acids may be aromatic, for example, isophthalic and terephthalic acids. Preferred dicarboxylic acids are of the formula

$$HOOC\text{-}Y\text{-}COOH , \qquad III$$

wherein Y represents a divalent aliphatic group containing at least 2 carbon atoms, and examples of such acids are sebacic acid, octadecanedoic acid, suberic acid, glutaric acid, pimelic acid and adipic acid.

Typical examples of polyamides (Nylons) useful in the instant immiscible polymer blends include for example polyamides 4/6, 6, 6/6, 11, 12, 6/3, 6/4, 6/10 and 6,12 as well as polyamides resulting from terephthalic acid and/or isophthalic acid and trimethyl hexamethylene diamine, polyamides resulting from adipic acid and meta xylylenediamines, polyamides resulting from adipic acid, azelaic acid and 2,2-bis-(p-aminocyclohexyl)propane, semi-crystalline polyamides resulting from combinations of terephthalic and/or isophthalic and/or adipic acids with hexamethylene diamine, semi-crystalline polyamides resulting from terephthalic and/or isophthalic acids and hexamethylene and 2-methyl pentamethylene diamines, and polyamides resulting from terephthalic acid and 4,4'-diamino-dicyclohexylmethane. Mixtures and/or copolymers of two or more of the foregoing polyamides or prepolymers, respectively, are also within the scope of the present invention. Preferred polyamides are the polyamides 6, 6/6, 6/10 and 4/6, most preferably polyamide 6/6.

It is also understood that use of the term "polyamides" herein and in the appended claims is intended to include the toughened or super tough polyamides. Super tough polyamides or super tough nylons, as they are more commonly known, are available commercially, e.g., from E.I. duPont under the tradename Zytel ST, or may be prepared in accordance with a number of U.S. patents, including, among others, Epstein, U.S. Patent 4,174,358; Novak, U.S. Patent 4,474,927; Roura, U.S. Patent 4,346,194; and Joffrion, U.S. Patent 4,251,644, herein incorporated by reference. These super tough nylons are prepared by blending one or more polyamides with one or more polymeric or copolymeric elastomeric toughening agents. Suitable toughening agents are disclosed in the above-identified U.S. patents, as well as in Caywood, Jr., U.S. Patent 3,884,882 and Swiger, U.S. Patent 4,147,740 and Gallucci et al., "Preparation and Reactions of Epoxy-Modified Polyethylene", *J. Appl. Poly. Sci.*, Vol. 27, pp. 425-437 (1982) herein incorporated by reference. Typically, these elastomeric polymers and copolymers may be straight chain or branched as well as graft polymers and copolymers, including core-shell graft copolymers, and are characterized as having incorporated therein either by copolymerization or by grafting on the performed polymer, a monomer having functional and/or active or highly polar groupings capable of interacting with or adhering to the polyamide matrix so as to enhance the toughness of the polyamide polymer.

The blending ratio of polyphenylene ether units to polyamide is 5 to 95% by weight, preferably 30 to 70% by weight of the former to 95 to 5% by weight, preferably 70 to 30% by weight of the latter.

The method for producing the blend compositions of the present invention is not particularly limited, and the conventional methods are satisfactorily employed. Generally, however, melt blending methods are desirable. The time and temperature required for melt-blending are not particularly limited, and they can properly be determined according to the composition of the material. The temperature varies somewhat with the blending ratio of the polyphenylene ether to polyamide, but it is generally within a range of 270° to 350°C. A prolonged time and/or a high shear rate is desirable for mixing, but the deterioration of the resin composition advances. Consequently, the time needs to be determined taking into account these points.

Any of the melt-blending methods may be used, if it can handle a molten viscous mass. The method may be applied in either a batchwise form or a continuous form. Specifically, extruders, Bambury mixers, rollers, kneaders and the like may be employed.

It is within the scope of the invention to include in the blending step elastomeric impact modifiers compatible with either or both of the polyphenylene ether and the polyamide.

Impact modifiers for polyphenylene etherpolyamide compositions are well known in the art. They are typically derived from one or more monomers selected from the group consisting of olefins, vinyl aromatic monomers, acrylic and alkylacrylic acids and their ester derivatives as well as conjugated dienes. Especially preferred impact modifiers are the rubbery high-molecular weight materials including natural and synthetic polymeric materials showing elasticity at room temperature. They include both homopolymers and copolymers, including random, block, radial block, graft and core-shell copolymers as well as combinations thereof.

A particularly useful class of impact modifiers comprises the AB (diblock) and ABA (triblock) copolymers and core-shell graft copolymers of alkenylaromatic and diene compounds, especially those comprising styrene and butadiene or isoprene blocks. The conjugated diene blocks may be partially or entirely hydrogenated, whereupon they may be represented as ethylene-propylene blocks or the like and have properties similar to those of olefin block copolymers. Examples of triblock copolymers of this type are polystyrene-polybutadiene-polystyrene (SBS), hydrogenated polystyrene-polybutadiene-polystyrene (SEBS), polystyrene-polyisoprene-polystyrene (SIS), poly(a-methylstyrene)-polybutadiene-poly(a-methylstyrene) and poly(a-methylstyrene)-polyisoprene-poly(a-methylstyrene). Particularly preferred triblock copolymers are available commercially as CARIFLEX®, KRATON D® and KRATON G® from Shell.

Also suitable as impact modifiers are the ionomer resins, which may be wholly or partially neutralized with metal ions, and the core-shell type graft copolymers. In general, the latter have a predominantly conjugated diene or crosslinked acrylate rubbery core and one or more shells polymerized thereon and derived from monoalkenylaromatic and/or acrylic monomers alone or in combination with other vinyl monomers. Included are copolymers wherein an interpenetrating network of the resins employed characterizes the interface between the core and shell, such as those available from General Electric Company and described in U.S. Patent 3,944,631.

Other impact modifiers include the above-described types containing units having polar groups or active functional groups, as well as miscellaneous polymers such as Thiokol rubber, polysulfide rubber, polyurethane rubber, polyether rubber (e.g., polypropylene oxide), epichlorohydrin rubber, ethylene-propylene rubber, thermoplastic polyester elastomers and thermoplastic ether-ester elastomers.

The copolymer-containing compositions of this invention may also contain conventional ingredients such as fillers, flame retardants, pigments, dyes, stabilizers, antistatic agents, crystallization aids, mold release agents and the like, as well as resinous components not previously discussed.

Additionally, the immiscible polyamide blends may further comprise, for instance, functionalized polyphenylene ethers, polycarboxylic acids, ester groups, epoxy groups, anhydride groups, rubbers or any other conventional moiety employed to improve the properties of the immiscible blend.

The following examples and tables provided for hereinbelow are to further illustrate and facilitate the understanding of the present invention. The examples and tables are not intended to further limit the invention.

**Copolymer Preparation:** The following description is representative of the procedure used to prepare 2,6-xylenol-TMP copolymers and was used to prepare copolymers that contained up to 50% TMP. In polymerization sequencing experiments, TMP or 2,6-xylenol was added first, allowed to oligomerize and followed by the addition of a monomer mixture.

**Example 1**

A 5 liter flask equipped with condenser plus nitrogen tee, thermometer, stirrer, oxygen dip tube and addition funnel was charged with toluene (1750 ml), a 2,6-xylenol solution made from 112 mL toluene and 52.5 g xylenol, methyltrialkyl ($C_8$-$C_{10}$) ammonium chloride (10% solution in toluene w/v, 5.25 mL), di-t-butylethylene diamine (1.15 g), dimethylbutylamine (20.0 g), dibutylamine (5.4 g) and a solution of cuprous oxide in hydrobromic acid (10% w/v, 6.3 g). Oxygen was passed through the vigorously stirred reaction at approximately 3 standard cubic foot per hour while the remainder of the monomer solution (xylenol solution which contains 473 g xylenol and 545 g toluene and TMP 168 g plus toluene 350 mL) was added in 40 minutes while maintaining the temperature at 25°C via ice cooling. The polymerization temperature was allowed to increase to 35-40°C and the reaction continued for an additional 75 minutes. Acetic acid (21 mL) was added and the polymer was recovered by reverse precipitation with acetone and filtration. Subsequent to washing, the polymer was vacuum dried at 70°C to give 670 g of off-white powder. GPC measurements showed Mw and Mn values relative to polystyrene standards of 49,900 and 20,125 respectively. NMR spectra revealed at least about 95% incorporation of TMP in this example as well as for compositions that contained up to 60% TMP. It is most often preferred that the percent TMP in the instant xylenol-TMP copolymer is maintained at a level less than about 50% since above about 50% TMP in the copolymer results in less desirable low molecular weight polymers.

**Blend Preparation**: The following process was conducted to prepare a polyamide-PPE based immiscible blend.

**Example 2**

A thorough mixed dry blend of PPE (500 g), Kg 1651 Rubber (styrene-ethylene, butylene-styrene tri-block copolymers as defined by Shell Corp.) (125 g) and maleic anhydride (10 g) was extruded on a Welding Engineer's twin screw extruder operating at barrel set temperatures of 560 (die), 560, 560, 560, 500, 450 and 300°F with a screw speed of 400 rpm. The dry blends were fed at a rate of approximately 50 g/m and subsequently reformulated with PPE (0.20 g/g of extrudate) and Nylon 6,6 (0.80 g/g extrudate). Extrusion of these materials under similar conditions, followed by drying and molding produced American Society for Testing and Materials parts for notched Izod value measurement.

The data in Table 1 has been compiled to demonstrate that random incorporation of TMP leads to an increase in xylenol-TMP copolymer Tg as a function of TMP level. All entries have been prepared in the manner described by Example 1.

**TABLE 1**

Xylenol-TMP Copolymer Tg Values

| Entry | %TMP (w) | Tg (°C) | Mw* | Mn* |
|---|---|---|---|---|
| 1 | 0 | 215 | 43,000** | 17,500 |
| 2 | 10 | 217 | 45,000 | 24,348 |
| 3 | 24 | 222 | 49,900 | 21,500 |
| 4 | 31 | 224 | 60,900 | 27,000 |
| 5 | 40 | 227 | 52,000 | 18,500 |

*Values measured relative to polystyrene standards.
**Material has an intrinsic viscosity of 0.41 dl/g as measured at 25°C in chloroform.

The data in Table 2 has been arranged to show that the immiscible blends of the instant invention maintain favorable impact test results. Rubber Kg 1702 is styrene-ethylene, propylene di-block copolymer as defined by Shell Corp. All entries have been prepared in the manner described in Example 2.

## TABLE 2

Nylon/PPO/Maleic Anhydride/Rubber (49/41/0.8/10) Blends

| Entry | %TMP (w) | Rubber | % Copolymer in blend* | N. Izod** |
|---|---|---|---|---|
| 1 | 0 | Kg 1651 | 11.0 | 10.0 |
| 2 | 0 | Kg 1702 | 9.0 | 9.5 |
| 3 | 24 | Kg 1651 | 13.0 | 10.0 |
| 4 | 25 | Kg 1651 | 10.0 | 9.1 |
| 5 | 25 | Kg 1702 | 9.0 | 9.4 |

*Reported as % bound polyphenylene ether in the immiscible blend measured gravimetrically.

**Units are ft lb/inch of notch.

Additional assessment of the effect of varying PPO-based Tg on final blend heat deflection properties has been obtained by Dynamic Mechanical Analysis. For example, the curves in Figures 1 and 2, which were taken from compositions 2 and 5 in Table 2, show a shift of approximately 12°C in the high temperature tan δ transition of the TMP-containing example. This shift results in a retention of blend modulus at elevated temperature as depicted by Figure 3. A 7-8°C at 66 psi increase in HDT is expected as a result of the higher Tg PPE-based composition incorporation.

### Claims

1. A heat resistant immiscible polymer blend composition comprising a polyamide and a polyphenylene oxide based copolymer composition comprising a plurality of structural units of the formulae

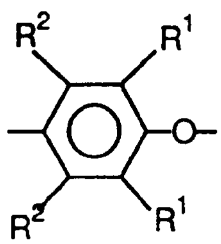

I

and

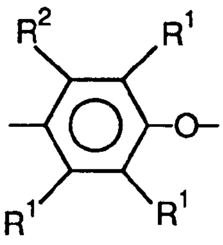

II ,

wherein each $R^1$ is independently halogen, primary, secondary or tertiary lower alkyls, phenyl, haloalkyl,

aminoalkyl, hydrocarbonoxy or halohydrocarbonoxy and at least 2 carbon atoms separate the halogen and oxygen atoms and each $R^2$ is independently hydrogen, halogen, primary, secondary or tertiary alkyls, phenyl, haloalkyl, hydroxycarbonoxy or halohydrocarbonoxy as defined for $R^1$ whereby the distribution of I to II in the copolymer is about 80 to 20% by weight of the former and about 20 to 80% by weight of the latter.

**2.** A heat resistant immiscible polymer blend composition in accordance with claim 1 whereby said copolymer composition is a block composition.

**3.** A heat resistant immiscible polymer blend composition in accordance with claim 1 whereby said copolymer composition is a random composition.

**4.** A heat resistant immiscible polymer blend composition in accordance with claim 1 whereby the ratio of polyphenylene ether based units to polyamide in said blend composition is from 5 to 95% by weight of the former and 95 to 5% by weight of the latter.

**5.** A heat resistant immiscible polymer blend composition in accordance with claim 1 whereby the ratio of polyphenylene ether based units to polyamide in said blend composition is from 30 to 70% by weight of the former and 70 to 30% by weight of the latter.

**6.** A heat resistant immiscible polymer blend composition in accordance with claim 1 whereby I is 2,6-xylenol and II is 2,3,6-trimethylphenol.

**7.** A heat resistant immiscible polymer blend composition in accordance with claim 1 whereby the percent of II in the copolymer does not exceed about 50%.

**8.** A heat resistant immiscible polymer blend composition in accordance with claim 1 whereby the polyamide is polyamide-6/6.

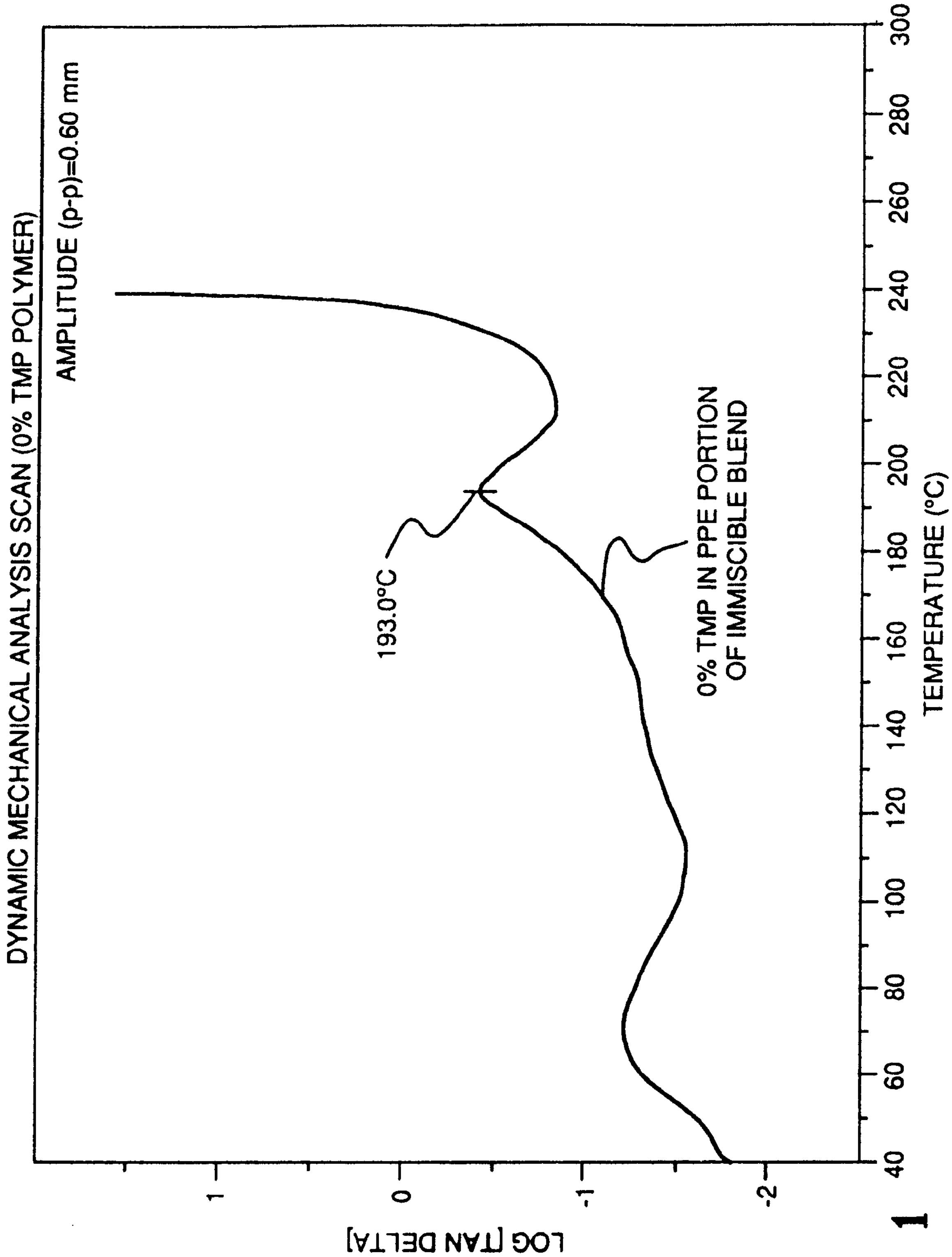
DYNAMIC MECHANICAL ANALYSIS SCAN (0% TMP POLYMER)
AMPLITUDE (p-p)=0.60 mm
193.0°C
0% TMP IN PPE PORTION
OF IMMISCIBLE BLEND
TEMPERATURE (°C)
40
60
80
100
120
140
160
180
200
220
240
260
280
300
LOG [TAN DELTA]
1
0
-1
-2

fig. 1

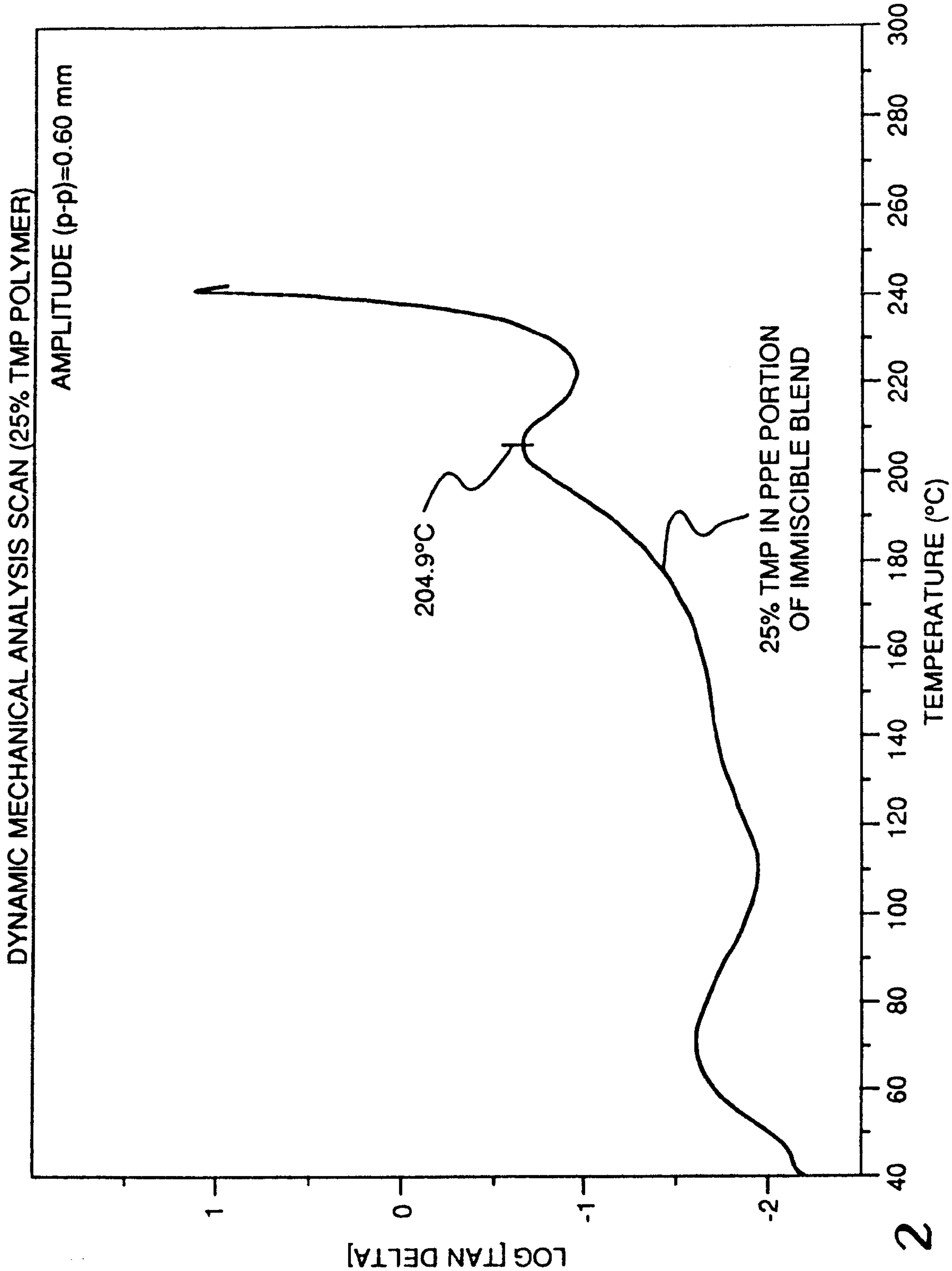
DYNAMIC MECHANICAL ANALYSIS SCAN (25% TMP POLYMER)
AMPLITUDE (p-p)=0.60 mm
204.9°C
25% TMP IN PPE PORTION
OF IMMISCIBLE BLEND
LOG [TAN DELTA]
1
0
-1
-2
40
60
80
100
120
140
160
180
200
220
240
260
280
300
TEMPERATURE (°C)

fig. 2

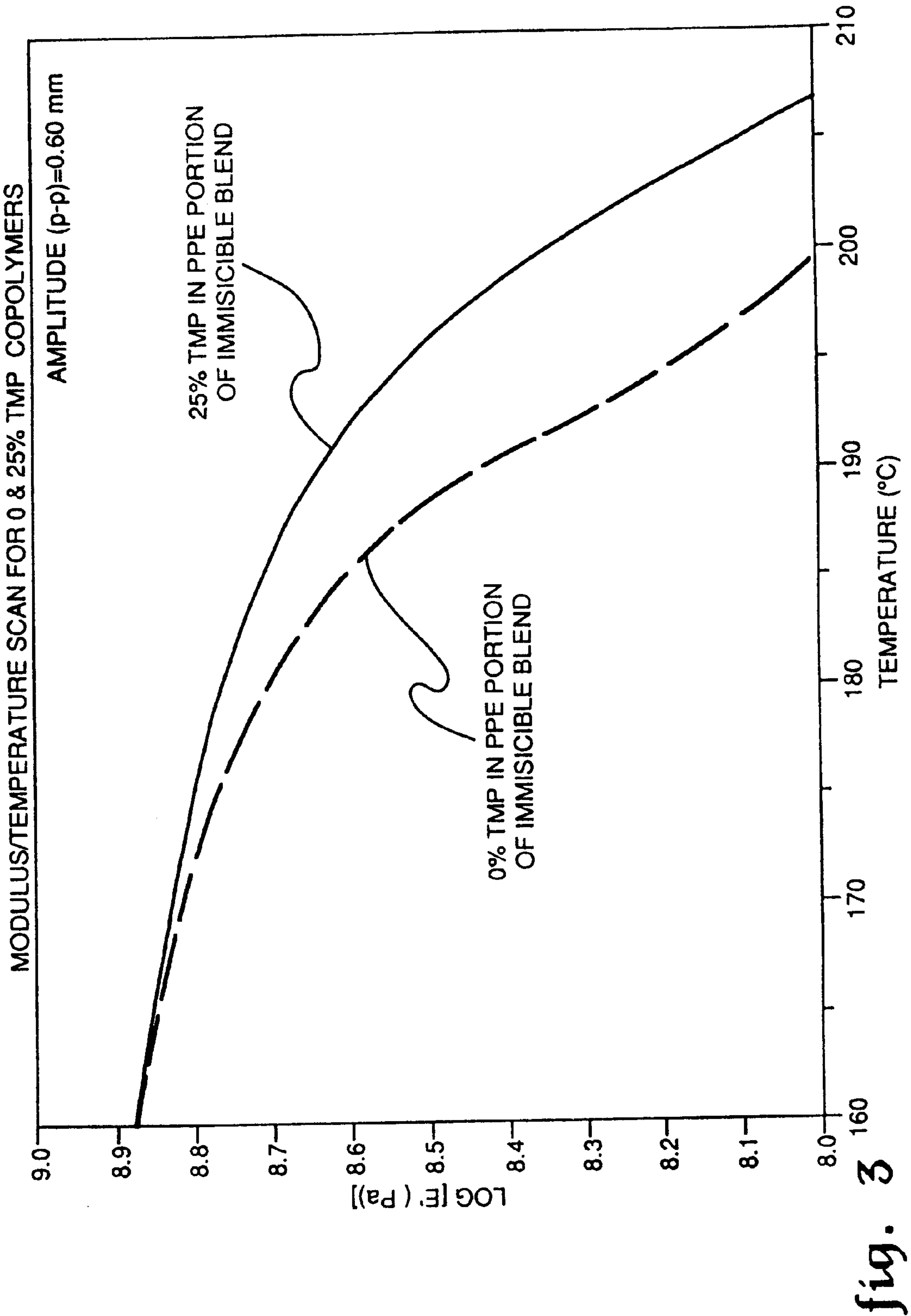
MODULUS/TEMPERATURE SCAN FOR 0 & 25% TMP COPOLYMERS
AMPLITUDE (p-p)=0.60 mm
25% TMP IN PPE PORTION OF IMMISICIBLE BLEND
0% TMP IN PPE PORTION OF IMMISICIBLE BLEND
LOG [E' ( Pa)]
9.0
8.9
8.8
8.7
8.6
8.5
8.4
8.3
8.2
8.1
8.0
160
170
180
190
200
210
TEMPERATURE (°C)

fig. 3